# EUROPÄISCHE PATENTSCHRIFT

(11) **EP 2 947 253 B1**
(45) Veröffentlichungstag und Bekanntmachung des Hinweises auf die Patenterteilung: **12.07.2017**
(21) Anmeldenummer: 15168332.3
(22) Anmeldetag: 20.05.2015
(51) Int. Cl.: E06B 3/263, E06B 3/30, E06B 7/14, E04D 13/035

(54) **FENSTER, INSBESONDERE WOHNDACHFENSTER, MIT EINER DÄMMUNG UND MINDESTENS EINEM ABDECKBLECH**
WINDOW, IN PARTICULAR SKYLIGHT, WITH INSULATION AND AT LEAST ONE COVERING PLATE
FENÊTRE, EN PARTICULIER LUCARNE, DOTÉE D'UNE ISOLATION ET D'AU MOINS D'UNE TÔLE DE RECOUVREMENT

(30) Priorität: 22.05.2014 DE 102014007698
(43) Veröffentlichungstag der Anmeldung: 25.11.2015
(73) Patentinhaber: ROTO FRANK AG, 70771 Leinfelden-Echterdingen (DE)
(72) Erfinder: Dres, Martin, 97996 Niederstetten (DE); Möslang, Daniel, 97271 Kleinrinderfeld (DE)
(74) Vertreter: Grosse, Rainer

(56) Entgegenhaltungen:
- EP-A1- 0 962 606
- EP-A1- 2 762 653
- EP-A2- 2 843 151
- WO-A1-2013/050042
- DE-C1- 10 037 880

## Beschreibung

Die Erfindung betrifft ein Wohndachfenster mit einem Blendrahmen und mit einem Flügelrahmen, wobei der Blendrahmen und/oder der Flügelrahmen mit mindestens einem Abdeckblech versehen ist und dem Blendrahmen und/oder dem Flügelrahmen eine vorzugsweise unterhalb des Abdeckblechs liegende Dämmung zugeordnet ist.

Ein Wohndachfenster der eingangs genannten Art ist bekannt. Zum Schutz, insbesondere vor Witterungseinflüssen, ist dem Blendrahmen und dem Flügelrahmen eine Abdeckung zugeordnet, die mindestens ein Abdeckblech aufweist. Ferner ist das bekannte Wohndachfenster mit einer Dämmung versehen. Insbesondere ist ein zwischen dem Flügelrahmen und dem Blendrahmen liegender Falzraum mit der Dämmung versehen. In Abhängigkeit von Umgebungsparametern, insbesondere Wetterparametern, kann sich an der Unterseite des Abdeckblechs Kondensat bilden und/oder Feuchtigkeit ansammeln. Hierdurch kann es zu insbesondere abtropfendem Wasser kommen, das insbesondere zwischen Flügelrahmen und Blendrahmen gelangt und/oder in andere Bereiche des Wohndachfensters und/oder angrenzende Bereiche. Ferner kann in Abhängigkeit des Öffnungswinkels des Wohndachfensters Wasser auf die Dämmung gelangen, zum Beispiel wenn sich das Wohndachfenster bei Regen in Spaltlüftungsstellung befindet. Dies alles kann zu Reklamationen führen. WO2013/050042 A1 offenbart ein Wohndachfenster nach dem Oberbegriff des Anspruchs 1.

Der Erfindung liegt die Aufgabe zugrunde, ein Wohndachfenster, der eingangs genannten Art zu schaffen, bei dem auf einfache Art und Weise Feuchtigkeitsprobleme verhindert sind.

Diese Aufgabe wird erfindungsgemäß dadurch gelöst, dass die Dämmung mit mindestens einer Wasserablaufrinne versehen ist. Von der Abdeckung, insbesondere dem Abdeckblech, kommendes, insbesondere abtropfendes Wasser gelangt auf die Dämmung und kann sich von dort nicht weiter verteilen, da es - entlang eines entsprechenden Oberflächenbereichs der Dämmung - in die Wasserablaufrinne gelangt und dadurch definiert abgeführt wird. Gleiches gilt für von außen in das Wohndachfenster eingedrungene Feuchtigkeit. Nach einer Weiterbildung der Erfindung ist vorgesehen, dass die Wasserablaufrinne durch Formgebung des Materials der Dämmung gebildet ist. Mithin stellt die Wasserablaufrinne nicht ein separates, an der Dämmung befestigtes Bauteil dar, sondern sie wird in die Dämmung eingeformt, wodurch eine sehr kostengünstige und einfache Lösung geschaffen ist. Die Wasserablaufrinne ist quasi eine Ausnehmung der Dämmung. Die Erfindung sieht vor, dass die Dämmung aus einem Kunststoffschaummaterial besteht. In einem derartigen Material lässt sich sehr einfach die Wasserablaufrinne ausbilden. Erfindungsgemäß ist ferner vorgesehen, dass zwischen Blendrahmen und Flügelrahmen ein Falzraum liegt, in dem sich die Dämmung oder zumindest ein Anteil davon befindet. Es kann vorgesehen sein, dass nur in dem Falzraum eine Dämmung angeordnet ist, die mindestens eine Wasserablaufrinne aufweist. Bei einem anderen Ausführungsbeispiel kann jedoch auch vorgesehen sein, dass der Blendrahmen des Wohndachfensters ebenfalls Anteile der Dämmung aufweist oder dass sich nur dort die Dämmung befindet. In jedem Falle ist erfindungsgemäß vorgesehen, dass die Dämmung oder dass der Anteil der Dämmung mindestens eine Wasserablaufrinne aufweist. Die Dämmung oder Anteile davon müssen sich auch nicht unmittelbar unter der Abdeckung befinden.

Nach einer Weiterbildung der Erfindung ist vorgesehen, dass die sich im Falzraum befindliche Dämmung eine Falzseite aufweist, die dem Blendrahmen und/oder dem Flügelrahmen gegenüberliegt, und dass die Falzseite die Wasserablaufrinne aufweist. Diese Falzseite verläuft insbesondere vertikal oder geneigt zur Vertikalen. Dennoch ist stets mindestens eine Wasserablaufrinne vorgesehen. Dies schließt natürlich nicht aus, dass beispielsweise auch in horizontalen Bereichen der Dämmung mindestens eine Wasserablaufrinne vorhanden ist. Die erwähnten Verläufe/Neigungen haben nichts mit der Dachneigung zu tun, denn derartige Wohndachfenster werden vorzugsweise in Schrägdächern eingesetzt. Die Dachneigung wirkt sich auf den Fallwinkel der Wasserablaufrinne aus. Ist ein steiles Dachvorhanden, so ist die Wasserablaufrinne stärker geneigt als bei einem weniger steilen Dach.

Eine Weiterbildung der Erfindung sieht vor, dass die Dämmung von mindestens einer Dämmplatte gebildet wird, die die Falzseite und eine der Falzseite gegenüberliegende, am Blendrahmen und/oder Flügelrahmen anliegende Anlageseite aufweist, wobei die Falzseite mit der Wasserablaufrinne versehen ist.

Es ist vorteilhaft, wenn sich die Wasserablaufrinne an einer vertikal verlaufenden oder im Wesentlichen vertikal verlaufenden Oberfläche der Dämmung befindet. Das sich sammelnde Wasser läuft dann von der sich oberhalb der Wasserablaufrinne befindenden Oberfläche der Dämmung ab und wird in der Wasserablaufrinne gesammelt und abgeführt.

Insbesondere ist vorgesehen, dass die Wasserablaufrinne - im Querschnitt gesehen - eine Rinneneinlaufwand und eine Rinnenrückhaltewand aufweist, wobei zwischen Rinneneinlaufwand und Rinnenrückhaltewand ein Rinnengrund liegt. In die Wasserablaufrinne gelangendes Wasser läuft über die Rinneneinlaufwand zum Rinnengrund. Die Rinnenrückhaltewand verhindert ein seitliches Herauslaufen des Wassers aus der Wasserablaufrinne.

Nach einer Weiterbildung der Erfindung ist vorgesehen, dass die Rinneneinlaufwand eine Wassereinlaufschräge aufweist. Diese stellt sicher, dass zulaufendes Wasser nicht abtropft und somit die Wasserablaufrinne verfehlt, sondern durch die Rinneneinlaufwand in das Innere der Wasserablaufrinne geführt wird.

Eine Weiterbildung der Erfindung sieht vor, dass die Dämmung mindestens einen Dämmblock aufweist, der mit der Wasserablaufrinne versehen ist.

Ferner ist es vorteilhaft, wenn an mindestens einem Ende der Dämmung die Wasserablaufrinne an ein Bauteil des Fensters angeschlossen ist, wobei das Bauteil Mittel für einen Weitertransport/Abtransport des Wassers aufweist. Mithin führt die Wasserablaufrinne ihr Wasser für einen Weitertransport oder Abtransport dem Bauteil des Fensters zu, sodass insbesondere der Abtransport des Wassers am Ende der Dämmung weitergehend definiert erfolgt, beispielsweise bis über das Flügelrahmenende und/oder Blendrahmenende hinaus, sodass das gesamte Fenster, insbesondere Wohndachfenster, und auch dessen unmittelbares Umfeld frei von unkontrollierter Feuchtigkeit bleibt.

Es ist vorteilhaft, wenn die Mittel einer Wasserführungsrinne und/oder einen Wasserführungskanal aufweisen. Die Wasserführungsrinne und/oder der Wasserführungskanal ist demzufolge an das zugeordnete Ende der Wasserablaufrinne der Dämmung angeschlossen.

Es ist vorteilhaft, wenn das Bauteil ein Profil des Blendrahmens und/oder des Flügelrahmens ist, insbesondere ein Kunststoffprofil. Derartige Profile sind üblicherweise bei einem Fenster, insbesondere Wohndachfenster, vorhanden und können nunmehr auch die Funktion der Wasserführung mit übernehmen.

Insbesondere kann das Bauteil eine Kunststoffecke des Blendrahmens und/oder des Flügelrahmens sein.

Schließlich ist es vorteilhaft, wenn die Wasserablaufrinne eine Abtropfwasserablaufrinne ist. Es wurde bereits darauf eingegangen, dass von der Innenseite der Abdeckung abtropfendes Kondensat mittels der Wasserablaufrinne abgeführt wird. Hierauf ist die Erfindung jedoch nicht beschränkt, denn auch andere Feuchtigkeit oder eindringendes Regenwasser und so weiter wird mittels der Wasserablaufrinne abgeführt. Handelt es sich bei der Wasserablaufrinne um die genannte Abtropfwasserablaufrinne, so soll dieses verdeutlichen, dass diese nur Abtropfwasser, also Kondensat abführt, also in einem Bereich des Fensters, insbesondere Wohndachfensters liegt, in den keine Feuchtigkeit von außen eintreten kann oder aufgrund einer einwandfreien Abdichtung verhindert ist.

Die Zeichnungen veranschaulichen die Erfindung anhand eines Ausführungsbeispiels und zwar zeigt:
- Figur 1: eine perspektivische Ansicht eines Wohndachfensters,
- Figur 2: einen Querschnitt durch das Wohndachfenster entlang der Linie II-II in Figur 1 und
- Figur 3: eine Seitenansicht auf einen unteren Bereich eines Flügelrahmens des Wohndachfensters.

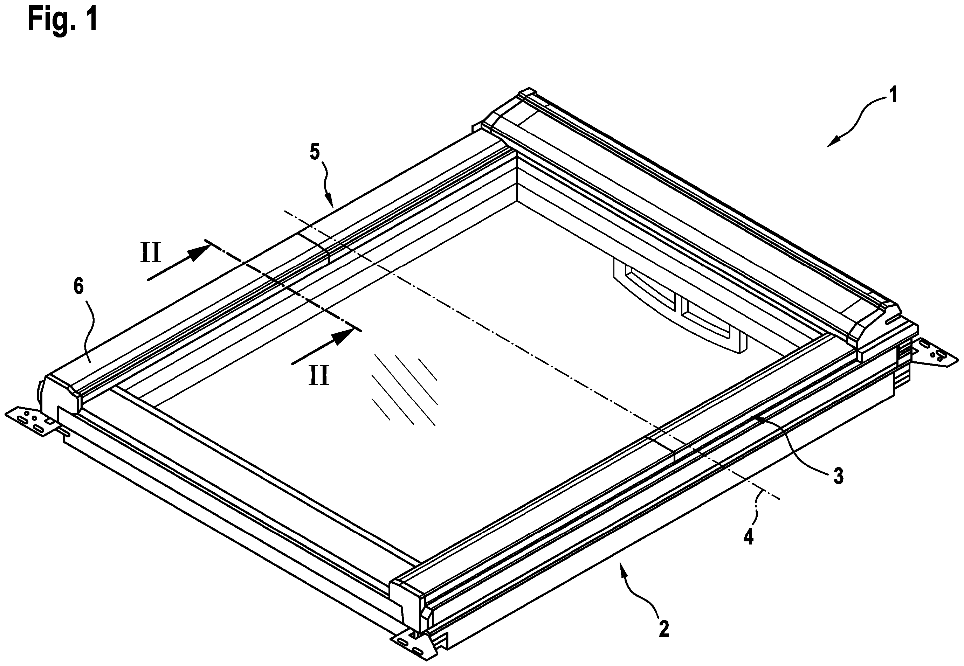

Die Figur 1 zeigt ein Fenster, das als Wohndachfenster 1 ausgebildet ist. Es weist einen Blendrahmen 2 und einen Flügelrahmen 3 auf. Der Flügelrahmen 3 kann um eine Schwingachse 4 relativ zum Blendrahmen 2 verlagert werden. Die Erfindung ist jedoch auch bei andersartig ausgebildeten Fenstern, insbesondere Wohndachfenstern 1, einsetzbar.

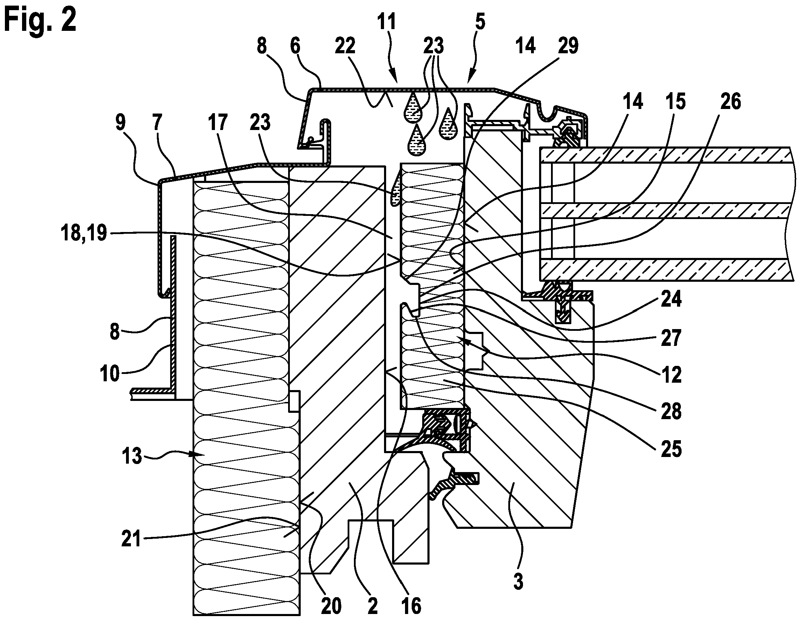

Das Wohndachfenster 1 ist mit einer Abdeckung 5 versehen, die mehrere Abdeckbleche 6 aufweist. Im vorliegenden Falle werden nur folgende Abdeckbleche 6 erwähnt, da diese aus der Figur 2 hervorgehen. Allerdings ist die Erfindung auch nicht auf diese konkrete Abdeckung 5 beschränkt.

Gemäß Figur 2 weist die Abdeckung 5 die Abdeckbleche 6, 7 und 8 auf. Konkret handelt es sich dabei um ein seitliches unteres Flügelabdeckblech 8, um ein seitliches Abdeckrahmenblech 9 sowie um ein Eindeckelement 10. Das Wohndachfenster 1 weist eine Dämmung 11 auf. Aus der Figur 2 geht von der Dämmung 11 ein erster Dämmblock 12 und ein zweiter Dämmblock 13 hervor. Der erste Dämmblock 12 besitzt eine Anlageseite 14, mit der er an einer Falzseite 15 des Flügelrahmens 3 anliegt. Der Blendrahmen 2 besitzt ebenfalls eine Falzseite 16, d.h., die beiden Falzseiten 14 und 16 liegen einander mit Abstand gegenüber, wodurch zwischen ihnen ein Falzraum 17 ausgebildet ist. In diesem Falzraum 17 befindet sich der erste Dämmblock 12. Eine Seitenfläche 18 des Dämmblocks 12 bildet ebenfalls eine Falzseite 19, die der Falzseite 16 des Blendrahmens 2 mit geringem Abstand gegenüberliegt. Der zweite Dämmblock 13 besitzt eine Anlageseite 20, die an einer Außenseitenfläche 21 des Blendrahmens 2 anliegt.

Die beiden Dämmblöcke 12 und 13 der Dämmung 11 sind beispielsweise plattenförmig, also als Dämmplatten ausgebildet. Selbstverständlich sind auch andere Formgebungen möglich. In der Figur 2 sind keine Befestigungsmittel dargestellt, die die Dämmblöcke 12 und 13 an dem Flügelrahmen 2 beziehungsweise Blendrahmen 3 halten. Für diese Befestigung können verschiedene Mittel zum Einsatz kommen, wie beispielsweise Raststifte, Schraubverbindungen, Klebeverbindungen und so weiter.

Anhand des Abdeckblechs 6 und dem im Falzraum 17 liegenden Dämmblock 12 wird nachstehend die Erfindung näher erläutert. Selbstverständlich können jedoch auch andere Teile der Dämmung 11 des Wohndachfensters 1 entsprechend ausgebildet sein, auch wenn sie sich an ganz anderen Stellen des Wohndachfensters 1 befinden. Sie müssen auch nicht unter der Abdeckung 5 liegen.

Beispielhaft wird davon ausgegangen, dass sich an der Unterseite 22 des Abdeckblechs 6, also des seitlichen unteren Flügelabdeckblechs 8, Kondensat 23, also ein Wasserfilm, Wassertropfen und so weiter bildet. Zusätzlich oder alternativ ist es auch denkbar, dass sich unterhalb der Abdeckung 5, in diesem Falle unter dem Abdeckblech 6, Feuchtigkeit befindet, weil sie von außen her eingedrungen ist. Die Erfindung bezieht sich sowohl auf Kondensat 23 als auch auf andere Feuchtigkeit.

Gemäß Figur 2 tropft Kondensat 23 von der Unterseite 22 der Abdeckung 5 ab und gelangt dadurch in den Falzraum 17, insbesondere auf die Oberfläche des Dämmblocks 12. Von dort aus läuft das Kondensat 23 unter Schwerkraftwirkung weiter nach unten, also die Falzseite 19 des Dämmblocks 12 entlang, bis sie auf eine in der Falzseite 19 ausgebildete Wasserablaufrinne 24 trifft. Hier sammelt sich das aus Wasser bestehende Kondensat 23 und kann - der Länge der Wasserablaufrinne 24 folgend - abfließen und somit unschädlich gemacht werden. Die Wasserablaufrinne 24 besitzt aufgrund des schrägen Einbaus des Wohndachfensters 1 in ein Schrägdach stets eine entsprechende Neigung zum Abfluss des Wassers und/oder es kann vorgesehen sein, dass die Abwasserablaufrinne 24 entsprechend schräg verlaufend in dem Dämmblock 12 ausgebildet ist. Im vorstehenden Ausführungsbeispiel wird jedoch von einer Dachneigung ausgegangen, sodass der erwähnte Schrägverlauf im Dämmblock 12 nicht vorliegt.

Die Wasserablaufrinne 24 ist durch Formgebung des Materials 25 der Dämmung 11, also in diesem Falle des Dämmblocks 12, gebildet. Als Material der Dämmung 11 wird bevorzugt Kunststoffschaum eingesetzt, insbesondere geschlossenporiger Kunststoffschaum.

Die Wasserablaufrinne 24 besitzt - im Querschnitt gesehen - eine Rinneneinlaufwand 26 und eine Rinnenrückhaltewand 27. Zwischen Rinneneinlaufwand 26 und Rinnenrückhaltewand 27 liegt ein Rinnengrund 28. Die Rinneneinlaufwand 26 ist mit einer Wassereinlaufschrägen 29 versehen. Auf die Wasserablaufrinne 24 zulaufende Wassertropfen gelangen zur Wassereinlaufschrägen 29 der Rinneneinlaufwand 26, ohne dass sie abtropfen, sondern sie werden dem Rinnengrund 28 zugeführt. Die Rinnenrückhaltewand 27 verhindert ein Wiederherauslaufen des Wassers aus der Wasserablaufrinne 24.

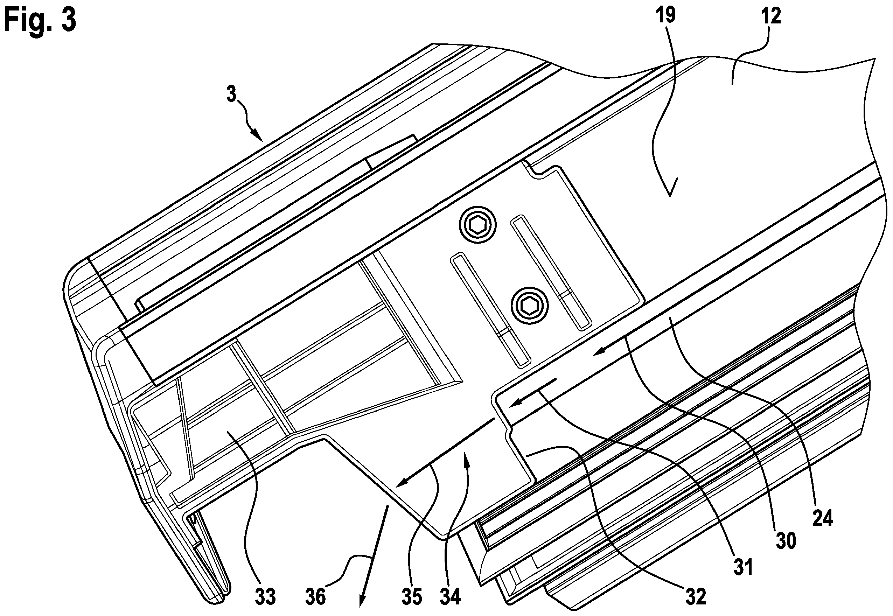

Die Figur 3 zeigt eine Seitenansicht auf den Flügelrahmen 3 des Wohndachfensters 1. Die Falzseite 19 des Dämmblocks 12 ist ersichtlich sowie die darin ausgebildete Wasserablaufrinne 24. Der Schrägverlauf der Wasserablaufrinne 24 ergibt sich aufgrund der Dachneigung des Dachs, in das das Wohndachfenster 1 eingebaut ist. Mittels der Pfeile 30 und 31 ist angedeutet, wie Kondensat oder auch anderes Wasser und so weiter entlang der Wasserablaufrinne 24 abgeführt wird. Um dieses Wasser möglichst weit aus dem Wohndachfenster 1 herauszuführen, ist vorgesehen, dass sich am Ende 32 der Dämmung 11, also des Dämmblocks 12, ein Bauteil 33 des Wohndachfensters 1 befindet, das mit einem Mittel 34 ausgestattet ist, um das Wasser der Wasserablaufrinne 24 weiter abzutransportieren. Bei diesem Mittel 34 kann es sich um eine Wasserführungsrinne und/oder einen Wasserführungskanal handeln. Letzterer ist gegenüber der Rinne allseitig geschlossen, weist also nur einen Kanaleingang und einen Kanalausgang auf. In der Figur 3 ist lediglich das Mittel 34 in Form eines Pfeiles 35 dargestellt, der verdeutlicht, dass die Wasserablaufrinne 24 an das Mittel 34 angeschlossen ist und letzteres den Weitertransport/Abtransport des Wassers übernimmt. Im dargestellten Ausführungsbeispiel der Figur 3 wird das Wasser letztendlich gemäß Pfeil 36 nach außen abgeführt. Es tropft von dort beispielsweise auf Eindeckelemente der Eindeckung und kann daher nicht in das Dach oder dergleichen eindringen. Bei dem Bauteil 33 kann es sich insbesondere um ein Profil des Flügelrahmens, insbesondere um ein Kunststoffprofil, handeln. Im vorliegenden Falle handelt es sich um eine Kunststoffecke des Flügelrahmens 3.

## Patentansprüche

1. Wohndachfenster (1) mit einem Blendrahmen (2) und einem Flügelrahmen (3), wobei der Blendrahmen (2) und/oder der Flügelrahmen (3) mit mindestens einem Abdeckblech (6) versehen ist und dem Blendrahmen (2) und/oder dem Flügelrahmen (3) eine vorzugsweise unterhalb des Abdeckblechs (6) liegende Dämmung (11) zugeordnet ist, wobei die Dämmung (11) aus einem Kunststoffschaummaterial besteht, und wobei zwischen Blendrahmen (2) und Flügelrahmen (3) ein Falzraum (17) liegt, in dem sich die Dämmung befindet,
**dadurch gekennzeichnet**, das die Dämmung (11) mit mindestens einer Wasserablaufrinne (24) versehen ist.

2. Wohndachfenster nach Anspruch 1, **dadurch gekennzeichnet, dass** die Wasserablaufrinne (24) durch Formgebung des Materials (25) der Dämmung (11) gebildet ist.

3. Wohndachfenster nach einem der vorhergehenden Ansprüche, **dadurch gekennzeichnet, dass** die sich im Falzraum (17) befindliche Dämmung (11) eine Falzseite (19) aufweist, die dem Blendrahmen (2) und/oder dem Flügelrahmen (3) gegenüberliegt, und dass die Falzseite (19) die Wasserablaufrinne (24) aufweist.

4. Wohndachfenster nach Anspruch 3, **dadurch gekennzeichnet, dass** die Dämmung (11) von mindestens einer Dämmplatte gebildet wird, die die Falzseite (19) und eine der Falzseite (19) gegenüberliegende, am Blendrahmen (2) und/oder Flügelrahmen (3) anliegende Anlageseite (14) aufweist, wobei die Falzseite (19) mit der Wasserablaufrinne (24) versehen ist.

5. Wohndachfenster nach einem der vorhergehenden Ansprüche, **dadurch gekennzeichnet, dass** sich die Wasserablaufrinne (24) an einer vertikal verlaufenden oder im Wesentlichen vertikal verlaufenden Oberfläche der Dämmung (11) befindet.

6. Wohndachfenster nach einem der vorhergehenden Ansprüche, **dadurch gekennzeichnet, dass** die Wasserablaufrinne (24) - im Querschnitt gesehen - eine Rinneneinlaufwand (26) und eine Rinnenrückhaltewand (27) aufweist, wobei zwischen Rinneneinlaufwand (26) und Rinnenrückhaltewand (27) ein Rinnengrund (28) liegt.

7. Wohndachfenster nach Anspruch 6, **dadurch gekennzeichnet, dass** die Rinneneinlaufwand (26) eine Wassereinlaufschräge (29) aufweist.

8. Wohndachfenster nach einem der vorhergehenden Ansprüche, **dadurch gekennzeichnet, dass** die Dämmung (11) mindestens einen Dämmblock (12,13) aufweist, der mit der Wasserablaufrinne (24) versehen ist.

9. Wohndachfenster nach einem der vorhergehenden Ansprüche, **dadurch gekennzeichnet, dass** an mindestens einem Ende (32) der Dämmung (11) die Wasserablaufrinne (24) an ein Bauteil (33) des Fensters angeschlossen ist, wobei das Bauteil (33) Mittel (34) für einen Weitertransport/Abtransport des Wassers aufweist.

10. Wohndachfenster nach Anspruch 9, **dadurch gekennzeichnet, dass** die Mittel (34) eine Wasserführungsrinne und/oder einen Wasserführungskanal aufweisen.

11. Wohndachfenster nach einem der vorhergehenden Ansprüche 9 oder 10, **dadurch gekennzeichnet, dass** das Bauteil (33) ein Profil des Blendrahmens (2) und/oder des Flügelrahmens (3) ist, insbesondere ein Kunststoffprofil.

12. Wohndachfenster nach einem der vorhergehenden Ansprüche 9 oder 10, **dadurch gekennzeichnet, dass** das Bauteil (33) eine Kunststoffecke des Blendrahmens (2) und/oder des Flügelrahmens (3) ist.

13. Wohndachfenster nach einem der vorhergehenden Ansprüche, **dadurch gekennzeichnet, dass** die Wasserablaufrinne (24) eine Abtropfwasserablaufrinne ist.

## Claims

1. A residential skylight (1) comprising a blind frame (2) and a sash frame (3), wherein the blind frame (2) and/or the sash frame (3) is provided with at least one cover plate (6) and an insulation (11), which is preferably located below the cover plate (6), is assigned to the blind frame (2) and/or the sash frame (3), wherein the insulation (11) consists of a plastic foam material, and wherein a rebate space (17), in which the insulation is located, lies between blind frame (2) and sash frame (3), **characterised in that** the insulation (11) is provided with at least one water drain gutter (24).

2. The residential skylight according to claim 1, **characterised in that** the water drain gutter (24) is formed by shaping the material (25) of the insulation (11).

3. The residential skylight according to any one of the preceding claims, **characterised in that** the insulation (11) located in the rebate space (17) has a rebate side (19), which is located opposite the blind frame (2) and/or the sash frame (3), and **in that** the rebate side (19) has the water drain gutter (24).

4. The residential skylight according to claim 3, **characterised in that** the insulation (11) is formed by at least one insulating board, which has the rebate side (19) and an installation side (14), which is located opposite the rebate side (19) and which rests against the blind frame (2) and/or sash frame (3), wherein the rebate side (19) is provided with the water drain gutter (24).

5. The residential skylight according to any one of the preceding claims, **characterised in that** the water drain gutter (24) is located on a surface of the insulation (11), which runs vertically or substantially vertically.

6. The residential skylight according to any one of the preceding claims, **characterised in that** the water drain gutter (24) - viewed in cross section - has a gutter inlet wall (26) and a gutter retention wall (27), wherein a gutter base (28) lies between gutter inlet wall (26) and gutter retention wall (27).

7. The residential skylight according to claim 6, **characterised in that** the gutter inlet wall (26) has a water inlet chamfer (29).

8. The residential skylight according to any one of the preceding claims, **characterised in that** the insulation (11) has at least one insulating block (12, 13), which is provided with the water drain gutter (24).

9. The residential skylight according to any one of the preceding claims, **characterised in that** the water drain gutter (24) is connected to a component (33) of the window on at least one end (32) of the insulation (11), wherein the component (33) has means (34) for an onward transport/removal of the water.

10. The residential skylight according to claim 9, **characterised in that** the means (34) have a water guide gutter and/or a water guide channel.

11. The residential skylight according to any one of the preceding claims 9 or 10, **characterised in that** the component (33) is a profile of the blind frame (2) and/or of the sash frame (3), in particular a plastic profile.

12. The residential skylight according to any one of the preceding claims 9 or 10, **characterised in that** the component (33) is a plastic corner of the blind frame (2) and/or of the sash frame (3).

13. The residential skylight according to any one of the preceding claims, **characterised in that** the water drain gutter (24) is a dripping water drain gutter.

## Revendications

1. Lucarne d'habitation (1) avec un dormant (2) et un châssis de battant (3), dans laquelle le dormant (2) et/ou le châssis de battant (3) est pourvu d'au moins une tôle de recouvrement (6) et une isolation (11) située de préférence en dessous de la tôle de recouvrement (6) est associée au dormant (2) et/ou au châssis de battant (3), dans laquelle l'isolation (11) se compose d'un matériau de mousse synthétique et dans laquelle un espace de feuillure (17) se situe entre dormant (2) et châssis de battant (3) dans lequel l'isolation se trouve, **caractérisée en ce que** l'isolation (11) est pourvue d'au moins une rigole d'écoulement d'eau (24).

2. Lucarne d'habitation selon la revendication 1, **caractérisée en ce que** la rigole d'écoulement d'eau (24) est formée par façonnage du matériau (25) de l'isolation (11).

3. Lucarne d'habitation selon une des revendications précédentes, **caractérisée en ce que** l'isolation (11) se trouvant dans l'espace de feuillure (17) présente un côté de feuillure (19) qui est opposé au dormant (2) et/ou au châssis de battant (3), et que le côté de feuillure (19) présente la rigole d'écoulement d'eau (24).

4. Lucarne d'habitation selon la revendication 3, **caractérisée en ce que** l'isolation (11) est formée d'au moins une plaque isolante qui présente le côté de feuillure (19) et un côté d'appui (14) opposé au côté de feuillure (19), s'appuyant sur le dormant (2) et/ou châssis de battant (3), dans laquelle le côté de feuillure (19) est pourvu de la rigole d'écoulement d'eau (24).

5. Lucarne d'habitation selon une des revendications précédentes, **caractérisée en ce que** la rigole d'écoulement d'eau (24) se trouve sur une surface de l'isolation (11) s'étendant verticalement ou s'étendant essentiellement verticalement.

6. Lucarne d'habitation selon une des revendications précédentes, **caractérisée en ce que** la rigole d'écoulement d'eau (24) présente, vue en coupe transversale, une paroi d'entrée de rigole (26) et une paroi de retenue de rigole (27), dans laquelle un fond de rigole (28) se situe entre paroi d'entrée de rigole (26) et paroi de retenue de rigole (27).

7. Lucarne d'habitation selon la revendication 6, **caractérisée en ce que** la paroi d'entrée de rigole (26) présente un biseau d'entrée d'eau (29).

8. Lucarne d'habitation selon une des revendications précédentes, **caractérisée en ce que** l'isolation (11) présente au moins un bloc isolant (12, 13) qui est pourvu de la rigole d'écoulement d'eau (24).

9. Lucarne d'habitation selon une des revendications précédentes, **caractérisée en ce que** la rigole d'écoulement d'eau (24) est raccordée à un composant (33) de la fenêtre à au moins une extrémité (32) de l'isolation (11), dans laquelle le composant (33) présente des moyens (34) pour un transport supplémentaire/une évacuation de l'eau.

10. Lucarne d'habitation selon la revendication 9, **caractérisée en ce que** les moyens (34) présentent une rigole de guidage d'eau et/ou un canal de guidage d'eau.

11. Lucarne d'habitation selon une des revendications précédentes 9 ou 10, **caractérisée en ce que** le composant (33) est un profil du dormant (2) et/ou du châssis de battant (3), notamment un profil plastique.

12. Lucarne d'habitation selon une des revendications précédentes 9 ou 10, **caractérisée en ce que** le composant (33) est un angle plastique du dormant (2) et/ou du châssis de battant (3).

13. Lucarne d'habitation selon une des revendications précédentes, **caractérisée en ce que** la rigole d'écoulement d'eau (24) est une rigole d'écoulement d'eau d'égouttage.
